(19) Europäisches Patentamt
European Patent Office
Office européen des brevets

(11) **EP 2 423 492 B1**

(12) **EUROPEAN PATENT SPECIFICATION**

(45) Date of publication and mention
of the grant of the patent:
**31.07.2013 Bulletin 2013/31**

(51) Int Cl.:
***F02D 41/00*** *(2006.01)*    ***F02D 41/06*** *(2006.01)*
***F02D 41/40*** *(2006.01)*

(21) Application number: **10174672.5**

(22) Date of filing: **31.08.2010**

(54) **Controlling multifuel common rail engines**

Regelung eines Common-Rail-Mehrstoffmotors

Contrôle d'un moteur polycarburant à rampe commune

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**29.02.2012 Bulletin 2012/09**

(73) Proprietor: **Caterpillar Motoren GmbH & Co. KG
24159 Kiel (DE)**

(72) Inventors:
• **Schroeder, Alan
24106, Kiel (DE)**

• **Ritscher, Bert
24161, Altenholz (DE)**

(74) Representative: **Kramer - Barske - Schmidtchen
Landsberger Strasse 300
80687 München (DE)**

(56) References cited:
**EP-A1- 1 905 990        EP-A1- 2 098 707
DE-A1-102007 031 770    US-A- 4 955 345
US-A1- 2008 162 016**

**Description**

Technical Field

The present disclosure generally refers to operating an engine and more particularly to controlling an injection process of an engine configured to bum multiple types of fuels. Moreover, the present disclosure refers to a control system for controlling an injection process of an engine as well as an engine configured to bum multiple types of fuels.

Background

Engines, e.g. common rail engines and, in particular, medium-speed common rail engines, may be configured to operate with multiple types of fuels. Those engines are referred to as multifuel engines. The types of fuel include, for example, diesel oil (DO), marine diesel oil (MDO), and heavy fuel oil (HFO). When supplied to the engine for combustion, the viscosity of those fuels may vary from 2,5 $mm^2$/s to 16 $mm^2$/s (2.5 cSt to 16 cSt).

Usually the fuels are supplied through the same injection system, e.g. through the same injection nozzle, to the combustion chamber of the engine. The amount of fuel delivered to the combustion chamber can be controlled by adjusting the time period that an injection valve is opened. The injection process is influenced by the fuel viscosity and, therefore, by the type of fuel supplied to the engine. Accordingly, also key engine control functions such as a limitation of the maximum torque output and an optimization of the engine start performance can be influenced when changing the type of fuel being used to run the engine.

In multifuel engines, the effects of the different types of fuels have been addressed in various manners. For example, US 4,955,345 discloses

controlling a multifuel engine using a fuel viscosity correction. Specifically, the duration of the portion of the pulse duration in which fuel flows is varied in response to fuel composition and fuel temperature so as to compensate for the variation in viscosity of the fuel mixture.

US 5,706,780 discloses a device for determining a fuel property in a diesel engine and further discloses correcting a fuel injection amount or an exhaust recirculation amount based on the determined fuel property.

US 2009/0299609 Al discloses a locomotive engine multifuel control system to operate an engine independently of the fuel type by making various controls dependent on the fuel characteristics, thereby adjusting operation of the engine to account for the different fuel characteristics.

In the field of engine control, also US 2008/0962016 A1, EP 1 905 990 A1, and EP 2 098 707 A1 disclose methods to adapt the operation of an engine to fuel types.

Moreover, engines are often adapted to operate on alternative fuels in addition to fossil fuels. Alternative fuels include, for example, first generation bio fuels (e.g. palm oil, canola oil, oils based on animal fat), and second generation bio fuels (e.g. oils made of non-food crops, i.e. waste biomass). An example of a second generation bio fuel is "pyrolysis oil" obtained from the pyrolysis of, e.g. wood or agricultural waste, such as stalks of wheat or corn, grass, wood, wood shavings, grapes and sugar cane.

In view of the large variety of fuels, a control strategy is needed to compensate for the influence of various fuel-specific features on the engine operation and, in particular, a control strategy is needed that compensates for the influence of fuel viscosity on the injection process, e.g. the amount of fuel delivered by an injector. Herein this amount is also referred to as injector delivery or delivery.

The present disclosure is directed, at least in part, to improving or overcoming one or more aspects of prior systems.

Summary of the Disclosure

According to a first aspect of the present disclosure, methods for controlling an injection process of an engine that is configured to operate with multiple types of fuels are disclosed. The methods may comprise the steps of receiving a fuel amount request indicating a requested amount of fuel to be delivered, receiving at least one physical parameter indicating of the type of fuel provided to operate the engine, providing a map comprising a control parameter in dependence of the at least one physical parameter, reading the control parameter associated with the at least one physical parameter, determining an injection parameter for the injection process based on the control parameter and the requested amount of fuel, and operating the engine based on the injection parameter.

According to another aspect of the present disclosure, control systems for controlling an injection process of an engine configured to run with multiple types of fuels are disclosed. The systems may comprise an interface, for example, an operator interface, for receiving a fuel amount request indicating a requested amount of fuel to be delivered to the engine. The systems may further comprise a measuring unit for measuring a physical parameter such as the fuel temperature and/or the fuel viscosity, during operation of the engine, wherein the physical parameter may indicate the type of fuel provided to operate the engine. The systems may further comprise a control unit configured to perform, for example, the above-described methods for controlling an injection process.

According to another aspect, engines configured to run with multiple types of fuels are disclosed. The engines may comprise at least two fuel tanks, a combustion chamber, an injection system fluidly connected to the fuel tanks and the combustion chamber, and configured to inject fuel provided from at least one of the at least two fuel tanks into the combustion chamber, and a control system for controlling an injection process of the engine.

Other features and aspects of this disclosure will be apparent from the following description and the accompanying drawings.

Brief Description of the Drawings

Fig. 1 is a schematic block diagram of a multi-fuel internal combustion engine;

Fig. 2 is a diagram illustrating a curve indicating a valve current over time as applied for a single injection;

Fig. 3 is a diagram illustrating the injection rate over time as caused by the valve operation indicated in Fig. 2;

Fig. 4 is a flowchart illustrating generally a control process of a multifuel engine;

Fig. 5 is a flowchart illustrating the determination of a cranking fuel limit within a fuel-specific control process of a multifuel engine;

Fig. 6 is a map comprising values of a cranking fuel limit in dependence of a fuel temperature and a coolant temperature;

Fig. 7 is a flowchart illustrating the determination of an injection duration a fuel-specific control process of a multifuel engine;

Fig. 8 is a table of exemplary injection durations for MDO and HFO required to provide requested injector deliveries;

Fig. 9 is a plot of curves illustrating the dependence given in the table of Fig. 8 for the fuel-specific delivery versus injection duration for MDO and HFO;

Fig. 10 is a plot of curves for comparing a delivery-injection duration curve for MDO with a best fit of the delivery-injection duration curve for MDO approximated using a characteristic of the injection for HFO;

Fig. 11 is a map of minimum injection durations for HFO for a set of common rail pressure values;

Fig. 12 is a map of characteristic coefficients for HFO (HFO weight factors) for a set of requested injector deliveries and a set of common rail pressure values; and

Fig. 13 is a map of fuel-specific duration parameters for a set of common rail pressure values and for MDO and HFO.

Detailed Description

The following is a detailed description of exemplary embodiments of the present disclosure. The exemplary embodiments described therein and illustrated in the drawings are intended to teach the principles of the present disclosure, enable those of ordinary skill in the art to implement, and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The disclosure may be based in part on the discovery that, in a control system using a map to determine a control parameter, extending the dimension of the map by a physical parameter corresponding to the type of fuel allows to easily adapt existing control systems to be used with multifuel engines.

The disclosure may be further based in part on the discovery that adjusting a cranking fuel limit in a control process to the temperature of the coolant may improve the engine start performance because the coolant temperature may in some cases be indicative for the duration of an engine being in a standby mode.

Furthermore, the disclosure may be based in part on the discovery that a fuel injection system may be characterized by a specific dependence of a delivered amount of fuel (injector delivery) versus injection duration. Such a characteristic dependence may be derived for one fuel type and may be described by coefficients that are specific for the injection system and a injection duration parameter (usually a maximum duration) that is specific for the fuel. By adapting the injection duration parameter for a different fuel, the same coefficients may then be used to approximate the delivered amount for that different fuel. For example, the dependence of injector delivery from the injection duration for MDO may be approximated by using the coefficients derived for HFO and adapting the injection duration parameter to MDO. The change in fuel type may be indicated by a physical parameter of the fuel measured before the injection, e.g. the fuel viscosity and/or the fuel temperature.

The methods disclosed herein may improve, for example, the engine performance in regard to rail pressure governing and the engine start characteristics for different fuels.

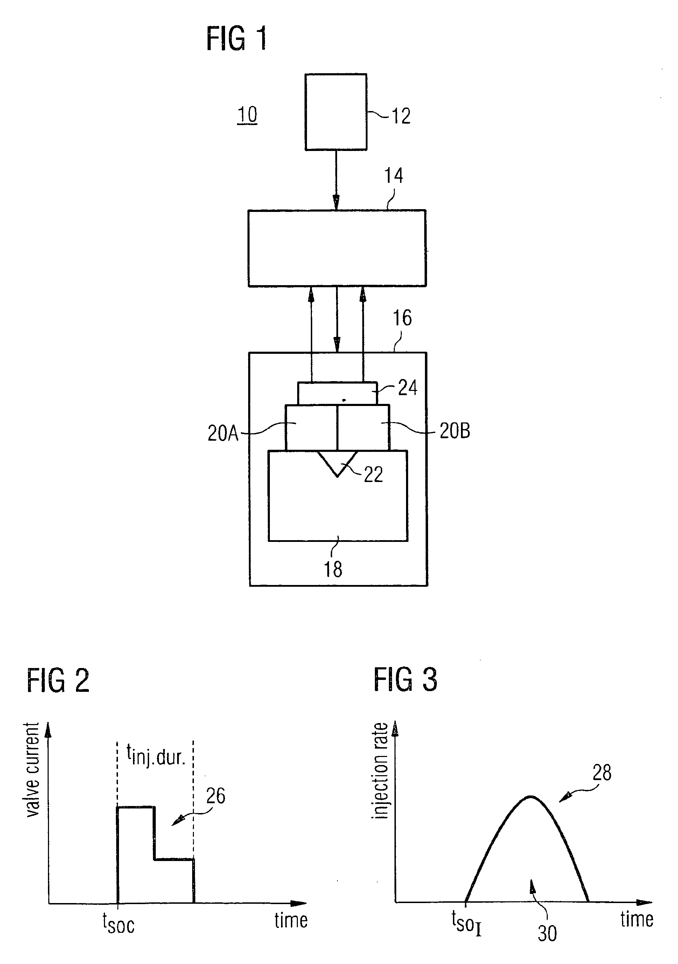

Referring to Fig. 1, a multi-fuel engine system 10 may include an interface 12 for receiving input parameters, a control unit 14 for receiving requests from interface 12, and an engine 16 being controlled by control unit 14.

Interface 12 may be an operator interface receiving input from an operator of the multi-fuel engine system 10 and/or an interface receiving input from a superior, e.g. automated, control system.

Control unit 14 may include one or more processors and one or more memory units for storing maps containing values used within the control process performed in control unit 14, e.g., for deriving one or more control parameters for running engine 16.

Engine 16 may be a common rail engine, e.g. a medium-speed or low-speed common rail engine. Engine 16 may include a combustion unit 18 and at least two fuel tanks 20A and 20B for storing different types of fuels that may be provided to operate engine 16.

Usually, different fuels may be provided at different temperatures to the engine. For example, MDO may be provided at a temperature of about 40°C while HFO may be provided at a temperature of 150°C. Accordingly, engine system 10 of Fig. 1 may further include a heating system to provide the fuel at the desired temperature.

An injection unit 22 is fluidly connected to the fuel tanks 20A, 20B and is configured to inject a controlled amount of fuel into combustion unit 18 for initiating an internal combustion process.

Engine 16 may further comprise a measuring unit 24 configured to measure the temperature of the fuel before injection by injection unit 22. In addition or alternatively, measuring unit 24 may be configured to measure the viscosity of the fuel before injection. Measuring unit 24 may include, e.g., sensors to measure the temperature or viscosity of the fuel.

In addition, measuring unit 24 may be configured to measure the coolant temperature of a coolant provided to cool engine 16 and specifically to cool an injection nozzle of injection unit 22.

For example, in a common rail system, injection unit 22 may comprise an injection valve for each cylinder and the valve may be operated by control unit 14 through providing a valve current. An example of a valve current curve 26 for a single injection shot depicted over time is shown in Fig. 2. At a start of current time $t_{soc}$, the valve current may be increased to and then maintained at a maximum current value. Then, after a first time period, the current may be reduced and maintained at a second current value until, after a total time period, the current may be reduced to zero thereby closing the valve again. The total time period may be a control parameter of the injection process and is herein referred to as the injection duration $t_{inj.dur.}$.

In Fig. 3, an example of an injection rate curve 28 for the fuel injection is schematically illustrated for a fuel injection process that may be caused by the valve operation illustrated in Fig. 2. With some delay with respect to the start of current time $t_{soc}$, the fuel injection may start at a start of injection time $t_{SOI}$, and fuel may be injected with a continuously increasing rate until a maximum injection rate is reached. The injection rate may then be reduced to zero, e.g., at a faster rate than during the increase of the injection valve. An area 30 enclosed by curve 28 indicates the amount of fuel injected into combustion unit 18 during the single injection shot.

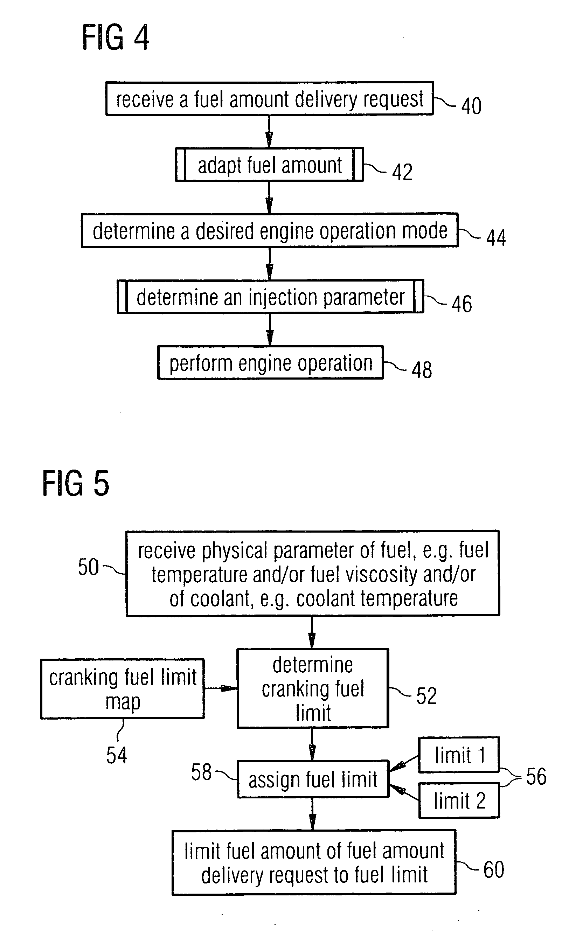

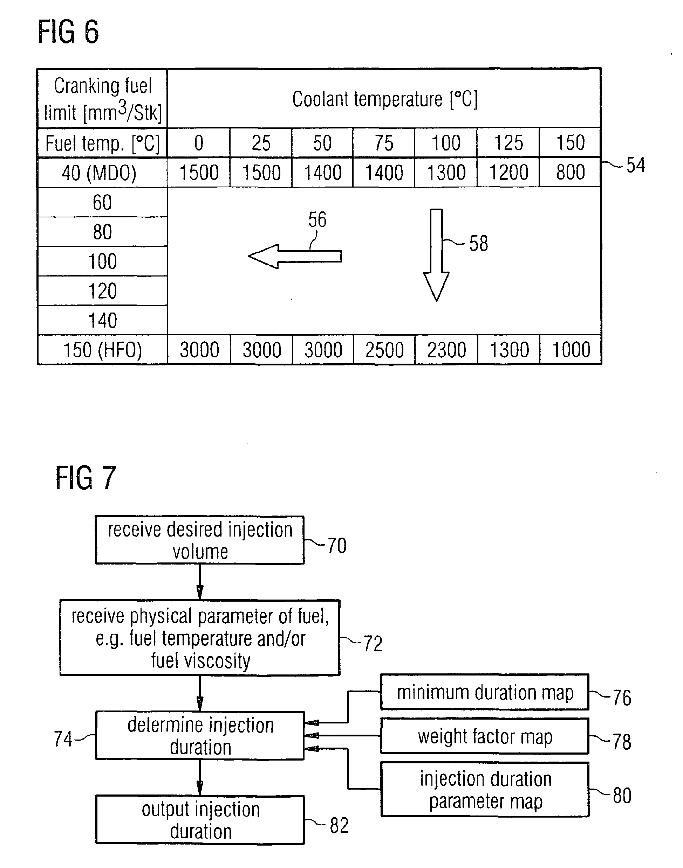

In Fig. 4, a flowchart of a process for controlling an engine operation is shown. The process may result in a fuel-adapted engine operation, specifically a fuel-adapted injection. Details of a first fuel-specific control aspect regarding cranking an engine will be explained in connection with Figs. 5 and 6. Details of a second fuel-specific control aspect regarding determining an injection duration for the injection process and will be explained in connection with Figs. 7 to 13.

Referring to Fig. 4, in the process for controlling an engine operation, a fuel amount delivery request may be received (step 40), e.g., from an interface such as an operator interface. For example, the request may indicate that a multifuel engine is to be started after being in a standby mode for a period of time or that the output power is to be increased or decreased.

The requested amount of fuel may then be adapted to the specific conditions of the engine operation (step 42). For example, the requested amount may be above a threshold level (limit) that applies to the specific conditions and, therefore, the requested amount may be adapted to the allowed limit. The specific conditions of the engine operation may be given by the engine type, fuel type, place of operation of the engine, etc. The adaption of a limit may be performed fuel-specifically. For example, a measured fuel temperature and/or fuel viscosity may be provided and used for the adaptation as explained in connection with Figs. 5 and 6.

Based on the originally requested or the adapted amount of fuel, a desired engine operation mode may then be determined (step 44). The desired engine operation mode may be characterized by, for example, the injection mode, the amount of fuel to be injected, any specific timing of the injection to achieve the amount, as well as any other operation mode, e.g., of an air intake system.

For the desired engine operation mode, one or more engine parameters may then be determined (step 46). Examples for engine parameters include injection parameters such as the injection mode and/or the injection duration. The determination of the engine parameters may be performed fuel-specifically. For example, a measured fuel temperature and/or fuel viscosity may be provided to the determination of an injection parameter as explained in connection with Figs. 7 to 13.

Based on the determined engine parameters, the engine operation is performed (step 48).

For the start up phase of the engine (also referred to as the cranking of the engine), Fig. 5 shows an exemplary flowchart for adapting the requested fuel amount (step 42 of Fig. 4) to the specific fuel used to start the engine.

There may be the need to determine an amount of fuel to be injected for starting the engine. In general, a maximal amount of fuel may depend on various conditions such as the engine, the injection system, the accepted degree of pollution of the exhaust during start up, and the time needed to start the engine. Thus, the maximal amount of fuel that is allowed to be injected may be defined within the control unit by various limits, one of which being the so called cranking fuel limit.

In the process for controlling the engine operation of Fig. 5, determining the cranking fuel limit (step 52) requires first receiving a physical parameter of the fuel intended to be injected into the combustion chamber (step 50). For example, a fuel temperature and/or a fuel viscosity may be measured with, e.g., a sensor positioned at the fuel filter before the injection nozzle. In addition or alternatively, a coolant temperature of a coolant provided to cool the multifuel engine may be measured.

Moreover, for the process for controlling the engine operation a cranking fuel limit map 54 is provided, the values of which may be used to determine the cranking fuel limit in step 52.

An example of a cranking fuel limit map 54 is shown in Fig. 6. As explained above, the cranking fuel limit is an upper value for the amount of fuel that is allowed to be injected into the combustion chamber during the cranking of the engine. The cranking fuel limit may be provided as a value indicating a volume per stroke ($mm^3$/Stk). For example, cranking fuel limit map 54 may provide cranking fuel limit values for several fuel temperatures, e.g. 40°C, 60°C, 80°C, 100°C, 120°C, 140°C, and 150°C and may further contain values for a set of coolant temperatures, e.g. 0°C, 25°C, 50°C, 75°C, 100°C, 125°C, and 150°C.

Generally, applying a higher cranking fuel limit may increase the amount of fuel injected during cranking. Specifically, applying a higher cranking fuel limit for a less viscous fuel may result in longer injection duration and, therefore, to an increase of the amount of injected fuel.

Within cranking fuel limit map 54, the cranking fuel limit values may increase with increasing fuel temperature and decrease with decreasing coolant temperature as indicated by arrows 56 and 58.

This exemplary dependence within cranking fuel limit map 54 indicates that to provide a requested amount of fuel for a fuel having a lower viscosity (higher fuel temperature), higher cranking fuel limits may be applied.

Comparing the cranking process using HFO or MDO, due to the reduced viscosity of HFO in comparison with MDO (in the cranking phase heating of the fuel may not yet be achieved for the fuel close to the injection nozzle), a longer injection duration may generally be applied to result in a similar amount of fuel injected into the combustion chamber. Thus, applying an increased HFD cranking fuel limit as provided in the map shown in Fig. 6 may increase the amount of HFO injected during cranking in comparison with the case of injecting MDO. As may be seen in Fig. 6, the cranking fuel limit value at 150° for HFO is larger than the cranking fuel limit value at 40° for MDO.

Thus, adapting the cranking fuel limit map 54 by adding a dimension indicating the fuel type may improve the start-up of a multifuel engine.

Additionally or alternatively, one may provide another dimension to cranking fuel limit map 54 to indicate the change of the cranking fuel limit with engine speed.

Moreover, additionally or alternatively, the coolant temperature may be a further parameter of cranking fuel limit map 54 as shown in Fig. 6. The coolant temperature may be used as an indicator of how long the engine has been in standby mode. Specifically, measuring the coolant temperature and increasing the cranking fuel limit in cases of longer periods in standby mode (i.e. lower coolant temperatures) may generally improve the start-up of an engine, in particular of an engine operated with heated fuel.

Returning to Fig. 5, the one or more physical parameters received in step 50 may provide an indication of the fuel type being provided to the injector and of the duration that an engine was in standby mode. By reading the respective cranking fuel limit from cranking fuel limit map 54 for the measured fuel temperature and/or coolant temperature and/or engine speed, the cranking fuel limit may be determined (step 52).

Beside the cranking fuel limit, additional limits 56 may apply during operation of the engine (limit 1 and limit 2 are exemplarily indicated in Fig. 5). Limits 56 may then be considered when assigning the fuel limit (step 58). Usually, the fuel limit may be derived to be the smallest of the limits selected from the determined cranking fuel limit and the limits 56.

Then, the smallest of the requested fuel amount and the determined fuel limit may be selected (step 60) and provided as an input parameter for the determination of the desired engine operation mode (step 44 in Fig. 4) of the control process.

In Fig. 7, a flow chart for determining the injection duration of a single injection shot is shown as an example for a fuel-specific determination of an engine parameter (step 46 of Fig. 4).

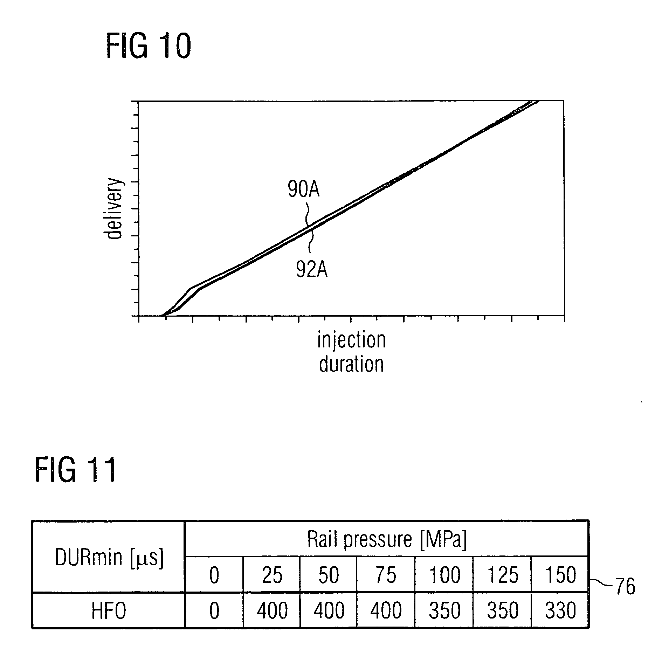

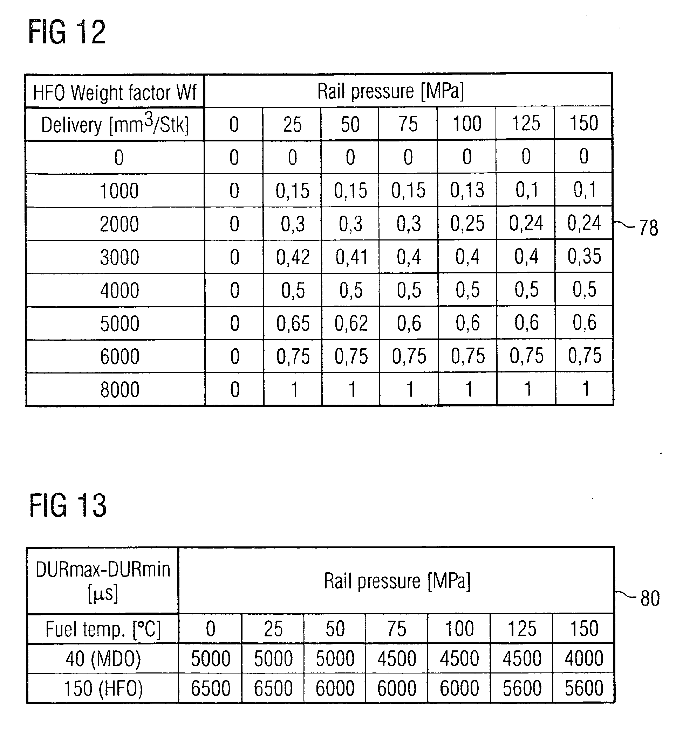

Specifically, one may receive the desired injection volume as, e.g., determined in step 60 of Fig. 5 (step 70) and the physical parameter of the fuel, e.g., the temperature or viscosity of the fuel (step 72). Then, the injection duration may be determined (step 74) based on the physical parameter and a minimum duration map 76 (an example of which is shown in Fig. 11), a weight factor map 78 (an example of which is shown in Fig. 12), and a duration parameter map 80 (an example of which is shown in Fig. 13).

Minimum duration map 76 may comprise minimum durations (in $\mu$s) determined, e.g., for HFO for various rail pressures of a common rail system (e.g. for 0 MPa, 25 MPa, 50 MPa, 55 MPa, 100 MPa, 125 MPa, and 150 MPa).

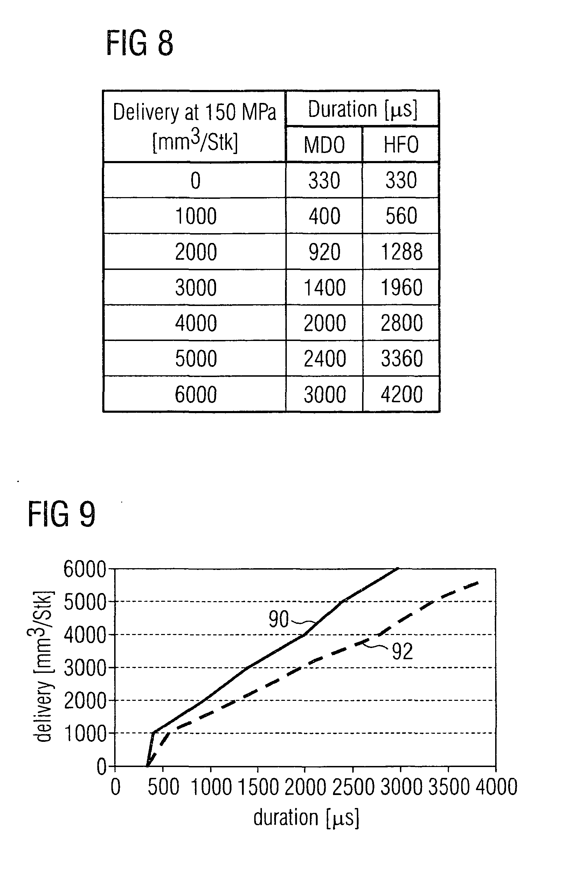

The injection duration may be determined (step 74) based on the concept that, in an injection system, a similar general behaviour of the delivered fuel amount with varying injection duration may be assumed for different types of fuels. For example, Fig. 8 shows a table of delivered fuel amount of MDO and HFO (delivery in mm$^3$/Stk) at a common rail pressure of 150 MPa for various injection durations (in $\mu$s). Fig. 9 shows corresponding delivery-injection duration dependencies as a curve 90 for MDO and a curve 92 for HFO.

In general, the longer an injection valve is open the more fuel may be delivered. As may be seen in Fig. 9, HFO may require a longer injection duration to have the same amount of fuel delivered due to its larger viscosity. For example, to deliver 4000 mm$^3$/Stk of MDO, for a specific injection mode, an injection duration of 2000 $\mu$s may be required while for the same injection mode, an injection duration of 2800 $\mu$s may be required for HFO.

For larger injection durations (larger than about 500 $\mu$s) an essentially linear behaviour of the injected amount with the injection duration may be given while for small injection durations, the injected amount may be reduced.

However, as curves 90 and 92 in general behave similarly, the delivery injection duration curve for, e.g., MDO may be approximated by the delivery injection curve for HFO. This may be seen, for example, in Fig. 10, which shows an approximation of an MDO curve 90A that is approximated by an HFO curve 92A.

Returning to Fig. 7, the injection determination may be derived from minimum duration map 76, weight factor map 78, duration parameter map 80, and the physical parameter measured for the fuel provided to the combustion chamber identifying the type of fuel using the following equation for the injection duration $DUR_Q$:

$$DUR_Q = DUR_{min} + Wf\,(DUR_{max} - DUR_{min}),$$

wherein $DUR_{min}$ is the minimum duration at which fuel is injected, $DUR_{max}$ is a maximum duration used to define the injection duration parameter $(DUR_{max}\ DUR_{min})$, and Wf is a weight factor.

As shown in Fig. 11, the minimum duration $DUR_{min}$ may decrease with increasing rail pressure as a higher pressure reduces the time required to push fuel into the combustion chamber.

The weight factor $Wf$ may characterize essentially the engine and its injector system and may provide coefficients in dependence of the desired injection volume, the coefficients may have values, e.g., between 0 and *1*. A weight factor of *1* may cause the delivery of the maximum amount of fuel. An exemplary weight factor map is shown in Fig. 12.

As shown in Fig. 13, the values for the injection duration parameter $DUR_{max}$-$DUR_{min}$ in injection duration parameter map 80 may decrease with increasing rail pressure. Moreover, the values for the injection duration parameter may be larger for fuels with a smaller viscosity. Thus, injection duration parameter map 80 of Fig. 12 may comprise a second dimension for values of the injection duration parameter $DUR_{max}$-$DUR_{min}$ with varying fuel temperature. Exemplary values for a fuel temperature of 40°C for MDO and of 150°C for HFO are shown in Fig. 13.

Providing a map comprising the control parameter "injection duration parameter" in dependence of a physical parameter characterizing the type of fuel, e.g. the fuel temperature, may allow using a single weight factor map for different types of fuels. In other words, an MDO delivery-injection duration curve may be approximated in a best fit by an HFO delivery-injection duration curve as discussed above and shown in Fig. 10.

Referring again to Fig. 7, the injection duration may be output as an engine parameter (step 82) and used to operate the engine (e.g. in step 46 of Fig. 4).

In other words, by realizing that the HFO delivery curve may be shifted to closely match the MDO delivery curve by providing fuel-adapted values in injection duration parameter map 80, a control method requiring simple soft and/or hardware configuration may be built.

Two examples of a control strategy to compensate for the influence of different fuel types (e.g. viscosity) on injector delivery were disclosed. By expanding the injector delivery maps to adjust to fuel type (viscosity), the maps for limiting engine power during cranking and determining the injection duration may be applied to different fuel types. As an indicator of fuel type, a temperature sensor and/or a viscosity sensor may be used. Thus, operation and particularly also a mixed fuel operation of a multi-fuel engine may be controlled.

Industrial Applicability

Herein, the term engine may refer to internal combustion engines which may be used as main or auxiliary engines of stationary power providing systems such as power plants for production of heat and/or electricity as well as in ships/vessels such as cruisers, liners, cargo ships, container ships and tankers.

Examples of such engines that are suitable for the proposed control system include medium-speed internal combustion diesel engines like inline- and V-type engines of the series M20, M25, M32, and M43 manufactured by Caterpillar Motoren GmbH & Co.KG Kiel, Germany, operated in a range of 500 to 100 rpm.

In common rail engines, injector delivery may generally vary with rail pressure and, accordingly, delivery curves may vary over the range of rail pressures applied in the common rail. In addition, for the same injection duration (also referred to as ON-time of the injection valve), injector delivery may be different for different fuels (e.g. for MDO and HFO) due to the different fuel viscosities. As HFO must be heated for use with the fuel system, the fuel temperature may be used to distinguish between fuel types. Alternatively or in addition, measuring the fuel viscosity may be used to distinguish between the fuel types.

Measured injector delivery curves may be represented mathematically based on a minimum duration map, a weight factor map, and an injector duration parameter map and, thereby, allow calculation of the required injection durations at a given rail pressure for a required amount of fuel.

Based on the discovery that the weight factor map may essentially be generic for all types of fuels and that the injection duration parameter map may be extended by an additional dimension with respect to the fuel type, e.g. identified by measuring fuel temperature or fuel viscosity, values adapted to the fuel types in the injection duration parameter map may be used to adjust the slope of the HFO delivery curve to closely match the slope of the MDO delivery curve.

Thus, when applying an adapted injection duration parameter with the weight factor map and the minimum duration map, the measured MDO delivery curve may be closely matched if the values of the injection duration parameter map are adapted appropriately to the fuel types.

Similarly, the cranking fuel limit map may be modified to optimize starting of, e.g., a medium-speed common rail engines on different types of fuel. Specifically, it was found that increasing the injection duration for higher viscosity fuel and/or increasing injection duration for longer periods in the standby mode by adjusting the cranking fuel limit, may be used to optimize the starting process. In that case, the cranking fuel limit map may correspond to a three-dimensional electronic map for adapting/limiting a starting fuel amount.

With respect to optimizing the cranking after a standby mode, the temperature of the circulation coolant within the cylinder head may be assumed to be directly proportional to the injector temperature. Providing increased cranking fuel limits for reduced coolant temperatures may allow cooler injector systems to apply an increased injector duration in order to increase the amount of fuel injected.

For example, a common rail engine running on HFO may face the issue of false starts when started after a long period of standby time. Despite the fact that the fuel system may be pre-heated, there is always a small amount of fuel between the injector and the flow limiter being not pre-heated. This fuel has a lower temperature and higher viscosity, thus reacting differently to a specific type of injection process compared to a fuel having a higher viscosity. For example, applying a standard amount of start fuel that would be sufficient to start the engine on MDO may not be sufficient for starting the engine on HFO.

Accordingly, applying non-adjusted injection parameters may result in an unnecessarily long start-up time or even in false start. The other way round, applying the large amounts of injected HFO to MDO start-up may result in the quenching problem of common rail systems (flame quenching) and also lead to false starts. Adapting the cranking fuel limit to the coolant temperature may also independently be applied for controlling a starting process of an engine, i.e. also when not adapting the cranking fuel limit to multiple fuels or when operating an engine only with a single fuel type.

A benefit of the control strategies disclosed herein may be that the amount of fuel to be injected may be optimized for the type of fuel used. The quenching problem for a hot engine started with MDO may further be avoided, for example, by filling the cranking fuel limit map with a lower fuel limit for MDO than for HFO. Moreover, a too slow engine start may be improved by applying a larger cranking fuel limit after a longer period of standby mode corresponding to flushing the injection system, e.g., with HFO.

Although the preferred embodiments of this invention have been described herein, improvements and modifications may be incorporated without departing from the scope of the following claims.

## Claims

1. A method for controlling an injection process of an engine (16) configured to run with multiple types of fuels, the method comprising:

receiving (40) a fuel amount request indicating a requested amount of fuel to be delivered;
receiving (50) at least one physical parameter indicating the type of fuel provided to operate the engine;
providing a map (54, 80) comprising a control parameter for a range of values of the at least one physical parameter, wherein providing a map comprises providing a common weight map (78) containing coefficients for various requested amounts of fuel, and an injection duration parameter map (80) containing values for a range of values of the physical parameter,

reading the control parameter associated with the received at least one physical parameter from the map (54, 80);
determining (46) an injection parameter for the injection process based on the control parameter and the requested amount of fuel, wherein determining the injection parameter comprises determining a value for the injection duration based on a coefficient read from common weight map (78) and a value read from the injection duration parameter map (80) for the received physical parameter such that the injection duration is determined specifically for the type of fuel indicated by the physical parameter;
and operating (48) the engine (16) based on the determined injection parameter.

2. The method of claim 1, wherein receiving (50) the at least one physical parameter includes receiving the fuel temperature and/or the fuel viscosity of the fuel ready for injection.

3. The method of claim 1 or 2, further comprising measuring the at least one physical parameter at a fuel filter and/or the injection system (24) of the engine.

4. The method of any one of claims 1 to 3, wherein providing a map (54, 80) comprises providing a cranking fuel limitation map (54)
containing, as a control parameter, maximum fuel amount values for a range of values of the physical parameter, and determining the injection parameter comprises applying the maximum fuel amount value read from the cranking fuel limitation map (54) and limiting (60) the requested fuel amount specifically to the type of fuel indicated by the physical parameter.

5. The method of claim 4, wherein the at least one physical parameter is a fuel temperature and, in the cranking fuel limitation map (54), the maximum fuel amount values increase with increasing fuel temperature.

6. The method of claim 4, wherein the at least one physical parameter is a fuel viscosity and, in the cranking fuel limitation map, the maximum fuel amount values decrease with increasing fuel viscosity.

7. The method of any one of claims 4 to 6, further comprising receiving a coolant temperature, and wherein the cranking fuel limitation map (54) contains, as a control parameter, maximum fuel amount values for a range of physical parameters and/or coolant temperatures.

8. The method of claim 7, wherein, for a constant physical parameter in the cranking fuel limitation map (54), the maximum fuel amount values increase with decreasing coolant temperature such that after a standby time of the engine (16) resulting in a lower coolant temperature, a larger maximum fuel amount value is applied when limiting the requested fuel amount.

9. The method of claim 1, wherein the at least one physical parameter is a fuel temperature and the values of the injection duration parameter map (80) increase with increasing fuel temperature.

10. The method of claim 1, wherein the at least one physical parameter is a fuel viscosity and the values of the injection duration parameter map (80) increase with decreasing fuel viscosity.

11. A control system for controlling an injection process of an engine (16) configured to run with multiple types of fuels, the control system comprising:

an interface (12) for receiving a fuel amount request indicating a requested amount of fuel to be delivered to the engine (10);
a measuring device (24) for measuring at least one physical parameter of the fuel during operation of the engine, the at least one physical parameter indicating the type of fuel provided to operate the engine (16); and
a control unit (14) configured to perform the method of any one of claims 1 to 10.

12. The control system of claim 11, wherein the measuring device (24) is a sensor for measuring the fuel temperature and/or the fuel viscosity of the fuel before injection.

13. An engine system (10) comprising:

an engine (16) configured to run with multiple types of fuels, the engine (10) comprising at least two fuel tanks (20A, 20B), a combustion chamber (18), and an injection system (22) connected to the fuel tanks (20A, 20B) and the combustion chamber (18) and configured to inject fuel provided from at least on of the at least two fuel tanks (20A, 20B) into the combustion chamber (18); and
a control system according to claim 11 or 12 for controlling an injection process of the engine (16).

14. The engine system (10) of claim 13, wherein the engine (16) is a medium speed common rail engine for fuel selected from the group of fuels consisting of diesel oil, marine diesel oil, heavy fuel oil, and alternative fuels.


**Patentansprüche**

1. Verfahren zum Regeln eines Einspritzvorgangs eines zum Betrieb mit mehreren Kraftstoffarten geeigneten Motors, mit
Empfangen (40) einer Kraftstoffmengenanfrage, die eine angefragte zuzuführende Kraftstoffmenge anzeigt;
Empfangen (50) mindestens eines physikalischen Parameters, der die Kraftstoffart anzeigt, die zum Betreiben des Motors vorgesehen ist,
Bereitstellen eines Kennfeldes (54, 80) mit einem Regelparameter für einen Wertebereich des mindestens einen physikalischen Parameters, wobei Bereitstellen eines Kennfeldes umfasst ein Bereitstellen eines gemeinsamen Wichtungskennfeldes (78) mit Koeffizienten für unterschiedliche angefragte Kraftstoffmengen und eines Einspritzdauerparameterkennfeldes (80) mit Werten für einen Wertebereich des physikalischen Parameters,
Lesen des mit dem empfangenen, mindestens einen physikalischen Parameter assoziierten Regelparameters aus dem Kennfeld (54, 80),
Bestimmen (46) eines Einspritzparameters für den Einspritzvorgang, basierend auf dem Regelungsparameter und der angefragten Kraftstoffmenge, wobei Bestimmen des Einspritzparameters umfasst ein Bestimmen eines Wertes für die Einspritzdauer basierend auf einem von dem gemeinsamen Wichtungskennfeld (78) gelesenen Koeffizienten und einem von dem Einspritzdauerparameterkennfeld (80) gelesenen Wert für den empfangenen physikalischen Parameter, sodass die Einspritzdauer spezifisch für die Kraftstoffart, die durch den physikalischen Parameter angezeigt wird, bestimmt wird,
und Betreiben (48) des Motors (16) basierend auf dem bestimmten Einspritzparameter.

2. Verfahren nach Anspruch 1, wobei Empfangen (50) des mindestens einen physikalischen Parameters umfasst ein Empfangen der Kraftstofftemperatur und/oder der Kraftstoffviskosität des für die Einspritzung zur Verfügung stehenden Kraftstoffes.

3. Verfahren nach Anspruch 1 oder 2, ferner mit Messen des mindestens einen physikalischen Parameters an einem Kraftstofffilter und/oder dem Einspritzsystem (24) des Motors.

4. Verfahren nach einem der Ansprüche 1 bis 3, wobei Bereitstellen eines Kennfeldes (54, 80) umfasst ein Bereitstellen eines Andrehkraftstoffbegrenzungskennfeldes (54), welches als einen Regelungsparameter einen Maximalkraftstoffmengenwert für einen Wertebereich des physikalischen Parameters aufweist, und
Bestimmen des Einspritzparameters umfasst ein Anwenden des von dem Andrehkraftstoffbegrenzungskennfeld (54) gelesenen Maximalkraftstoffmengenwertes und ein Begrenzen (60) der angefragten Kraftstoffmenge spezifisch zu der Kraftstoffart, die durch den physikalischen Parameter angezeigt wird.

5. Verfahren nach Anspruch 4, wobei der mindestens eine physikalische Parameter eine Kraftstofftemperatur ist und in dem Andrehkraftstoffbegrenzungskennfeld (54) die Maximalkraftstoffmengenwerte mit ansteigender Kraftstofftemperatur ansteigen.

6. Verfahren nach Anspruch 4, wobei der mindestens eine physikalische Parameter eine Kraftstoffviskosität ist und im Andrehkraftstoffbegrenzungskennfeld die Maximalkraftstoffmengenwerte mit ansteigender Kraftstoffviskosität abnehmen.

7. Verfahren nach einem der Ansprüche 4 bis 6, ferner mit Empfangen einer Kühlmitteltemperatur und wobei das Andrehkraftstoffbegrenzungskennfeld (54) als einen Regelungsparameter Maximalkraftstoffmengenwerte für einen Bereich von physikalischen Parametern und/oder Kühlmitteltemperaturen umfasst.

8. Verfahren nach Anspruch 7, wobei für einen konstanten physikalischen Parameter in dem Andrehkraftstoffbegrenzungskennfeld (54) die Maximalkraftstoffmengenwerte mit abnehmender Kühlmitteltemperatur zunehmen, sodass nach einem Standby-Zeitraum des Motors (16), der in einer niedrigeren Kühlmitteltemperatur resultiert, ein größerer Maximalkraftstoffmengengenwert angewendet wird, wenn die angefragte Kraftstoffmenge begrenzt wird.

9. Verfahren nach Anspruch 1, wobei mindestens einer der physikalischen Parameter eine Kraftstofftemperatur ist und die Werte des Einspritzdauerparameterkennfeldes (80) mit zunehmender Kraftstofftemperatur zunehmen.

10. Verfahren nach Anspruch 1, wobei der mindestens eine physikalische Parameter eine Kraftstoffviskosität ist, und die Werte des Einspritzdauerparameterkennfeldes (80) mit abnehmender Kraftstoffviskosität zunehmen.

11. Regelungssystem zum Regeln eines Einspritzvorganges eines Motors (16); der zum Laufen mit mehreren Kraftstoffarten ausgebildet ist, mit
einer Schnittstelle (12) zum Empfangen von Kraftstoffmengenanfragen, die eine angefragte an den Motor (16) abzugebende Kraftstoffmenge anzeigen,
eine Messvorrichtung (24) zum Messen mindestens eines physikalischen Parameters des Kraftstoffs während des Betriebs des Motors, wobei der mindestens eine physikalische Parameter die für den Betrieb des Motors (16) bereitgestellte Kraftstoffart anzeigt, und
einer Regelungseinheit (14) zum Durchführen des Verfahrens nach einem der Ansprüche 1 bis 10.

12. Regelungssystem nach Anspruch 11, wobei die Messvorrichtung (24) ein Sensor zum Messen der Kraftstofftemperatur und/oder der Kraftstoffviskosität des Kraftstoffs vor der Einspritzung ist.

13. Motorsystem (10) mit
einem Motor (16), der zum Laufen mit mehreren Kraftstoffarten ausgebildet ist, wobei der Motor (10) mindestens zwei Kraftstofftanks (20A, 20B), eine Brennkammer (18) und ein Einspritzsystem (22), das mit den Kraftstofftanks (20A, 20B) und der Brennkammer (18) verbunden und dazu ausgebildet ist, Kraftstoff aus mindestens einem der zwei Kraftstofftanks (20A, 20B) in die Brennkammer (18) einzuspritzen, und
ein Regelungssystem nach Anspruch 11 oder 12 zum Regeln eines Einspritzvorganges des Motors (16).

14. Ein Motorsystem (10) nach Anspruch 13, wobei der Motor (16) ein mittelschnell laufender Common Rail-Motor für Kraftstoff ausgewählt aus der Gruppe von Kraftstoffen bestehend aus Dieselkraftstoff, Marine-Dieselkraftstoff, Schweröl und alternativen Kraftstoffen ist.


**Revendications**

1. Procédé pour la commande d'un processus d'injection d'un moteur (16) configuré pour une mise en service avec plusieurs types de carburant, le procédé comprenant le fait de :

   recevoir (40) une demande de quantité de carburant indiquant une quantité demandée de carburant à distribuer ;
   recevoir (50) au moins un paramètre physique indiquant le type de carburant fourni pour la mise en service du moteur ;
   procurer une carte (54, 80) comprenant un paramètre de commande pour une plage de valeurs dudit au moins un paramètre physique, le fait de procurer une carte comprenant le fait de procurer une carte de pondération commune (78) contenant des coefficients pour diverses quantités demandées de carburant et une carte de paramètres de durées d'injection (80) contenant des valeurs pour une plage de valeurs du paramètre physique ;
   lire le paramètre de commande associé audit au moins un paramètre physique reçu à partir de la carte (54, 80) ;
   déterminer (46) un paramètre d'injection pour le processus d'injection en se basant sur le paramètre de commande et sur la quantité demandée de carburant, la détermination du paramètre d'injection comprenant le fait de déterminer une valeur pour la durée d'injection en se basant sur un coefficient lu à partir de la carte de poids commun (78) et une valeur lue à partir de la carte de paramètres de durées d'injection (80) pour le paramètre physique reçu de façon à déterminer la durée d'injection de manière spécifique pour le type de carburant indiqué par le paramètre physique ; et
   mettre le moteur (16) en service (48) en se basant sur le paramètre d'injection déterminé.

2. Procédé selon la revendication 1, dans lequel la réception (50) dudit au moins un paramètre physique englobe la réception de la température du carburant et/ou de la viscosité du carburant prêt pour l'injection.

3. Procédé selon la revendication 1 ou 2, comprenant en outre le fait de mesurer ledit au moins un paramètre physique à un filtre de carburant et/ou au système d'injection (24) du moteur.

**4.** Procédé selon l'une quelconque des revendications 1 à 3, dans lequel le fait de procurer une carte (54, 80) comprend le fait de procurer une carte de limitation de carburant de démarrage (54) contenant, à titre de paramètre de commande, des valeurs maximales de quantité de carburant pour une plage de valeur du paramètre physique, et le fait de déterminer le paramètre d'injection comprend le fait d'appliquer la valeur maximale de quantité de carburant lue à partir de la carte de limitation de carburant de démarrage (54) et le fait de limiter (60) la quantité de carburant requise de manière spécifique au type de carburant indiqué par le paramètre physique.

**5.** Procédé selon la revendication 4, dans lequel ledit au moins un paramètre physique est la température du carburant et, dans la carte de limitation du carburant de démarrage (54), les valeurs maximales de quantité de carburant augmentent de manière proportionnelle à l'élévation de la température du carburant.

**6.** Procédé selon la revendication 4, dans lequel ledit au moins un paramètre physique est la viscosité du carburant et, dans la carte de limitation du carburant de démarrage, les valeurs maximales de quantité de carburant diminuent de manière proportionnelle à l'élévation de la viscosité du carburant.

**7.** Procédé selon l'une quelconque des revendications 4 à 6, comprenant en outre la réception d'une température de liquide de refroidissement, et dans lequel la carte de limitation du carburant de démarrage (54) contient, à titre de paramètre de commande, des valeurs maximales de quantité de carburant pour une plage de paramètres physiques et/ou de températures du liquide de refroidissement.

**8.** Procédé selon la revendication 7, dans lequel, pour un paramètre physique constant dans la carte de limitation de carburant de démarrage (54), les valeurs maximales de quantité de carburant augmentent de manière proportionnelle à la diminution de la température du liquide de refroidissement, de telle sorte que, après un temps d'attente du moteur (16) donnant lieu à une température inférieure du liquide de refroidissement, on applique une quantité maximale supérieure de carburant lors de la limitation de la quantité demandée de carburant.

**9.** Procédé selon la revendication 1, dans lequel ledit au moins un paramètre physique est la température du carburant et les valeurs de la carte des paramètres de durée d'injection (80) augmentent de manière proportionnelle à l'élévation de la température du carburant.

**10.** Procédé selon la revendication 1, dans lequel ledit au moins un paramètre physique est la viscosité du carburant et les valeurs de la carte des paramètres de durée d'injection (80) augmentent de manière proportionnelle à la diminution de la viscosité du carburant.

**11.** Système de commande pour la commande d'un processus d'injection d'un moteur (16) configuré pour une mise en service avec plusieurs types de carburant, le système de commandes comprenant :

une interface (12) pour la réception d'une demande de quantité de carburant indiquant une quantité demandée de carburant à distribuer au moteur (10) ;
un dispositif de mesure (24) pour mesurer au moins un paramètre physique du carburant lors de la mise en service du moteur, ledit au moins un paramètre physique indiquant le type de carburant fourni pour la mise en service du moteur (16) ; et
une unité de commande (14) configurée pour la mise en oeuvre du procédé selon l'une quelconque des revendications 1 à 10.

**12.** Système de commande selon la revendication 11, dans lequel le dispositif de mesure (24) est un capteur pour mesurer la température du carburant et/ou la viscosité du carburant avant l'injection.

**13.** Système de moteur (10) comprenant :

un moteur (16) configuré pour une mise en service avec plusieurs types de carburant, le moteur (10) comprenant au moins deux réservoirs de carburant (20A, 20B), une chambre de combustion, (18) et un système d'injection (22) relié aux réservoirs de carburant (20A, 20B) et à la chambre de combustion (18), et configuré pour injecter du carburant fourni à partir d'au moins un desdits au moins deux réservoirs de carburant (20A, 20B) dans la chambre de combustion (18) ; et
un système de commande selon la revendication 11 ou 12 pour commander un processus d'injection du moteur (16).

**14.** Système de moteur 10 selon la revendication 13, dans lequel le moteur (16) est un moteur du type à rampe commune à haute pression travaillant à vitesse moyenne pour du carburant choisi parmi le groupe de carburants constitué par du carburant diesel, du carburant diesel marin, du mazout lourd et analogues.

# FIG 1

10

12

14

16

24

20A

20B

22

18

# FIG 2

valve current

$t_{inj.dur.}$

26

$t_{SOC}$

time

# FIG 3

injection rate

28

$t_{SO_I}$

30

time

## FIG 4

receive a fuel amount delivery request — 40

↓

adapt fuel amount — 42

↓

determine a desired engine operation mode — 44

↓

determine an injection parameter — 46

↓

perform engine operation — 48

## FIG 5

50 — receive physical parameter of fuel, e.g. fuel temperature and/or fuel viscosity and/or of coolant, e.g. coolant temperature

↓

cranking fuel limit map → determine cranking fuel limit — 52

54

↓

58 — assign fuel limit ← limit 1 / limit 2 — 56

↓

limit fuel amount of fuel amount delivery request to fuel limit — 60

# FIG 6

| Cranking fuel limit [mm$^3$/Stk] | Coolant temperature [°C] | | | | | | |
|---|---|---|---|---|---|---|---|
| Fuel temp. [°C] | 0 | 25 | 50 | 75 | 100 | 125 | 150 |
| 40 (MDO) | 1500 | 1500 | 1400 | 1400 | 1300 | 1200 | 800 |
| 60 | | | | | | | |
| 80 | | | | | | | |
| 100 | | | | | | | |
| 120 | | | | | | | |
| 140 | | | | | | | |
| 150 (HFO) | 3000 | 3000 | 3000 | 2500 | 2300 | 1300 | 1000 |

~54

56

~58

# FIG 7

receive desired injection volume ~70

receive physical parameter of fuel, e.g. fuel temperature and/or fuel viscosity ~72

74~ determine injection duration

minimum duration map ~76

weight factor map ~78

injection duration parameter map ~80

output injection duration ~82

## FIG 8

| Delivery at 150 MPa [mm$^3$/Stk] | Duration [μs] | |
|---|---|---|
| | MDO | HFO |
| 0 | 330 | 330 |
| 1000 | 400 | 560 |
| 2000 | 920 | 1288 |
| 3000 | 1400 | 1960 |
| 4000 | 2000 | 2800 |
| 5000 | 2400 | 3360 |
| 6000 | 3000 | 4200 |

## FIG 9

## FIG 10

## FIG 11

| DURmin [μs] | Rail pressure [MPa] | | | | | | |
|---|---|---|---|---|---|---|---|
| | 0 | 25 | 50 | 75 | 100 | 125 | 150 |
| HFO | 0 | 400 | 400 | 400 | 350 | 350 | 330 |

~76

## FIG 12

| HFO Weight factor Wf | Rail pressure [MPa] | | | | | | |
|---|---|---|---|---|---|---|---|
| Delivery [mm$^3$/Stk] | 0 | 25 | 50 | 75 | 100 | 125 | 150 |
| 0 | 0 | 0 | 0 | 0 | 0 | 0 | 0 |
| 1000 | 0 | 0,15 | 0,15 | 0,15 | 0,13 | 0,1 | 0,1 |
| 2000 | 0 | 0,3 | 0,3 | 0,3 | 0,25 | 0,24 | 0,24 |
| 3000 | 0 | 0,42 | 0,41 | 0,4 | 0,4 | 0,4 | 0,35 |
| 4000 | 0 | 0,5 | 0,5 | 0,5 | 0,5 | 0,5 | 0,5 |
| 5000 | 0 | 0,65 | 0,62 | 0,6 | 0,6 | 0,6 | 0,6 |
| 6000 | 0 | 0,75 | 0,75 | 0,75 | 0,75 | 0,75 | 0,75 |
| 8000 | 0 | 1 | 1 | 1 | 1 | 1 | 1 |

~78

## FIG 13

| DURmax-DURmin [μs] | Rail pressure [MPa] | | | | | | |
|---|---|---|---|---|---|---|---|
| Fuel temp. [°C] | 0 | 25 | 50 | 75 | 100 | 125 | 150 |
| 40 (MDO) | 5000 | 5000 | 5000 | 4500 | 4500 | 4500 | 4000 |
| 150 (HFO) | 6500 | 6500 | 6000 | 6000 | 6000 | 5600 | 5600 |

~80

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4955345 A
- US 5706780 A
- US 20090299609 A
- US 20080962016 A1
- EP 1905990 A1
- EP 2098707 A1